(19) Europäisches Patentamt

European Patent Office

Office européen des brevets

(11) **EP 1 096 005 A1**

(12) **EUROPÄISCHE PATENTANMELDUNG**

(43) Veröffentlichungstag:
**02.05.2001 Patentblatt 2001/18**

(51) Int. Cl.[7]: **C12G 1/02**, F25D 3/12

(21) Anmeldenummer: **00122771.9**

(22) Anmeldetag: **19.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.10.1999 DE 19951520**

(71) Anmelder:
**Linde Gas Aktiengesellschaft**
**82049 Höllriegelskreuth (DE)**

(72) Erfinder:
• **Adler, Robert**
 **2201 Gerasdorf (AT)**
• **Mayer, Helmut**
 **3451 Rust (AT)**

(54) **Verfahren und Vorrichtung zur Maischebehandlung**

(57)  Es wird vorgeschlagen, $CO_2$-Schnee über eine Kühllanze (6) direkt in die in einem Maischebehälter (8) befindliche Maische einzutragen. Dadurch wird die sog. Mazeration, d.h. jener Vorgang, der das Herauslösen von Farbe und Frucht aus Weintrauben beschreibt, verbessert.

_Figur_

## Beschreibung

Die Erfindung betrifft ein Verfahren und eine Vorrichtung zur Maischebehandlung, wobei die Maische in einem Maischebehälter gelagert wird.

Es ist in der Weintechnologie bekannt, daß durch Zugabe von Kohlendioxid die Mazeration — jener Vorgang, der das Herauslösen von Farbe und Frucht aus der Beerenhaut und dem Furchtfleisch beschreibt — intensiviert wird. Bei Rotwein ist es wünschenswert, diesen Vorgang auf bis zu 10 Tage auszudehnen, um viel Farbe und Frucht zu erhalten. Dabei sollte die Temperatur bei 5°C liegen und Sauerstofffreiheit herrschen. Bei Weißwein ist nur eine kurze Gärverzögerung von ca. 10-24 Stunden bei einer Temperatur von 12-24°C erwünscht, da sonst zu viele Farbstoffe herausgelöst werden.

Konventionell wird eine Kaltmazeration über einen Kältekreislauf, der entweder über den Mantel des Maischebehälters geführt ist, oder über einen Kreislauf, der im Inneren angebracht ist, durchgeführt. Der Kältekreislauf ist entweder ein normaler Kaltwasserkreislauf (ca. 10°C) oder weist eine Kälteanlage mit einer Kreislauftemperatur von -20°C auf. Mit dem normalen Kaltwasserkreislauf gelingt es nur sehr kurzfristig, eine Gärverzögerung zu erreichen. Wenn die Weintrauben bei sehr warmen Temperaturen (>15°C) geerntet werden, ist es sogar unmöglich, eine Gärverzögerung zu erreichen. Mit einer Kälteanlage kann die Gärverzögerung längerfristiger hinausgezögert werden. Es tritt jedoch bei sehr warmen Weintrauben eine kurzfristige Zwischengärung auf, bevor die Maische abgekühlt werden kann.

Der vorliegenden Erfindung liegt die Aufgabe zugrunde, ein Verfahren und eine Vorrichtung zur Maischebehandlung zur Verfügung zu stellen, die eine effektive und wirtschaftliche Mazeration gewährleisten.

Diese Aufgabe wird verfahrensseitig erfindungsgemäß dadurch gelöst, daß in den Maischebehälter Kohlendioxidschnee ($CO_2$-Schnee) eingebracht wird.

Durch das Einbringen von $CO_2$-Schnee über eine Kühllanze in den Maischebehälter kann die Maische von innen schnell und effizient gekühlt werden. Der entstehende $CO_2$-Gasanteil bewirkt darüber hinaus eine Verdrängung von Sauerstoff. Diese beiden Effekte, Kühlung und Sauerstofffreiheit, verhindern eine vorzeitige Gärung der Maische.

Falls die Weintrauben sehr warm sind (ca. 20°C und darüber), wird die Maische vorzugsweise zusätzlich mit Trockeneis vorgekühlt. Dies geschieht zweckmäßigerweise in einer Schneckenförderpumpe, mit der die Maische in den Maischebehälter gepumpt wird. Dadurch wird eine Temperaturreduktion von bis zu 15°C erreicht.

Bei direkter Kühlung der Maische durch Einbringen von $CO_2$-Schnee über eine an der Kühllanze angebrachte Düse besteht die Gefahr, daß beim Düsenaustritt durch die Kälte (-78°C) sich sofort ein Maischeeisklumpen bildet, der die Düse verlegt. Um diesen Effekt zu verhindern, wird bevorzugt eine Kühllanze mit einer am Austrittsende angeordneten offenen Einhausung, die zweckmäßigerweise glockenförmig ausgebildet ist, verwendet. Über eine Steuerung wird nun zuerst die Lanze mit $CO_2$-Gas gespült. Dadurch wird die Maische aus der Glocke gedrückt und ein Gaspolster aufgebaut. Erst danach wird $CO_2$ flüssig mit einem Druck von 200 bar durch die Kühllanze geleitet und der $CO_2$-Schnee, der an der Düse entsteht, in die Maische gesprüht. Nach dem Erreichen der gewünschten Maischetemperatur wird bevorzugt zusätzlich noch einmal mit $CO_2$-Gas nachgespült, damit sichergestellt ist, daß kein $CO_2$-Schnee in der Leitung oder an der Düse haften bleibt.

Vorrichtungsseitig wird die gestellte Aufgabe dadurch gelöst, daß der Maischebehälter eine in den Innenraum hineinragende Kühllanze aufweist, die mit einer Versorgungseinrichtung für flüssiges und gasförmiges $CO_2$ verbunden ist.

Die Kühllanze reicht bevorzugt bis in Nähe des Maischebehälterbodens. Außerdem weist die Kühllanze zweckmäßigerweise am Austrittsende eine offene Einhausung auf, die bevorzugt glockenförmig ausgebildet ist.

Die Erfindung weist eine ganze Reihe von Vorteilen auf.

1) Es wird ermöglicht, die Maische gezielt von innen heraus zu kühlen und kalt zu halten.

2) Gleichzeitig wird eine $CO_2$-Atmosphäre im Maischebehälter aufgebaut, um zusätzlich die Gärung zu unterbinden.

3) Bei besonders warm geernteten Weintrauben (ca. 20°C und darüber) wird durch Zugabe von Trockeneispellets in die Schneckenförderpumpe die Maische bereits vorgekühlt (um 10-15°C), um eine etwaige Zwischengärung zu verhindern.

4) Durch den $CO_2$-Einsatz kann man gezielt die Qualität des Weines in Bezug auf Farbe, Fruchtinhaltsstoffe, Duftnote und dergleichen beeinflussen.

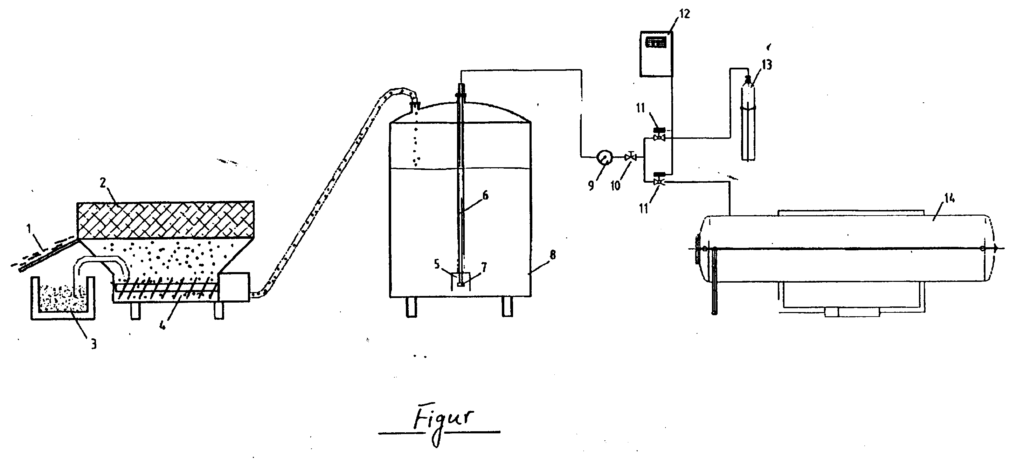

Im folgenden soll die Erfindung anhand eines in der Figur schematisch dargestellten Ausführungsbeispiels näher erläutert werden.

Zuerst werden die Weintrauben 1 im Rebler 2 vom Stiel getrennt und fallen in die Schneckenförderpumpe 4. Hier besteht die Möglichkeit, falls die Weintrauben sehr warm geerntet werden, mittels Trockeneispellets 3 die Trauben — noch bevor sie in den Maischebehälter 8 gelangen — vorzukühlen. Je nach Zugabe besteht die Möglichkeit, die Trauben um bis zu 15°C abzukühlen, wobei ein Teil des Kühlprozesses im Maischebehälter 8 stattfindet. Die Temperaturkontrolle findet im Maischebehälter 8 über eine angeschlossene Temperaturmessung statt. Zur Versorgung des Maischebehälters 8 mit $CO_2$ ist eine Kühllanze 6 vorgesehen, die in den Maischebehälter 8 hineinragt. Am unteren Ende der Kühllanze 6 ist eine Düse 7 angebracht, die von einer glockenförmigen Einhausung (Glocke) 5 umgeben ist. Die Kühllanze 6 steht über ein Manometer 9, ein Regelventil 10 und pneumatische Kugelhähne 11 mit einer $CO_2$-Gasversorgung 13 und eine $CO_2$-Flüssigversorgung 14 in Verbindung. Die pneumatischen Kugelhähne 11 werden mittels einer Steuerung 12 gesteuert. Mit dem $CO_2$-Schnee wird nun die Maische auf den gewünschten Temperaturwert gekühlt und gehalten.

Dazu gibt es drei Möglichkeiten:

1. über eine Handsteuerung; dabei wird so lange $CO_2$-Schnee eingesprüht, bis man die Kühlung manuell über die Steuerung wieder beendet.

2. über ein externes Signal; üblicherweise von einem Temperaturmeßgerät, welches die Kühlung so lange einschaltet, bis der gewünschte Sollwert erreicht ist. Dann wird die $CO_2$-Dosierung abgeschaltet bis wieder eine neues Signal ansteht.

3. über eine Intervall-Schaltung, bei welcher man Kühlzeit und Pausenzeit einstellen kann, um so die Maische über einen gewünschten Zeitraum langsam abkühlen zu können.

Nach dem Abkühlen auf die gewünschte Temperatur wird die Maische mittels einer der drei genannten Varianten bis zu dem Zeitpunkt, an dem die Gärung einsetzen soll, auf Temperatur gehalten. Durch das Kühlen und Halten mit $CO_2$ ist darüber hinaus während des gesamten Zeitraumes gewährleistet, daß der Maischebehälter 8 vollständig unter $CO_2$-Atmosphäre steht, welche zusätzlich gärunterbindend wirkt.

Die $CO_2$-Schneedosierung im Maischebehälter 8 durchläuft drei Phasen:

Phase 1:

$CO_2$-Gasvorspülung

Für ca. sechs Sekunden wird $CO_2$-Gas durch die Kühllanze 6 und Düse 7 in den Maischebehälter 8 geleitet. Dadurch wird erstens die Leitung unter $CO_2$-Druck (> 5 bar) gesetzt und zweitens die Maische aus der Glocke 5 gedrückt, um Vereisungen vorzubeugen.

Phase 2:

$CO_2$-Flüssigdosierung

Nach fünf Sekunden, noch bevor die Gasvorspülung abgeschlossen ist, wird der pneumatische Kugelhahn 11 für die Flüssigdosierung geöffnet. Das flüssige $CO_2$ wird erst an der Düse 7 auf unter 5 bar entspannt. Dabei entstehen je nach Druck und Temperatur ca. 50 % Gas und 50 % Schnee. Der $CO_2$-Schnee gibt nun seine Kälteenergie von ca. 570 kJ/kg an die Maische ab und verdampft zu Gas.

Phase 3:

$CO_2$-Gas nachspülen

Nach Erreichen der Temperatur wird, bevor sich der pneumatische Kugelhahn 11 für die Flüssigdosierung schließt, der Kugelhahn für das $CO_2$-Gas geöffnet und die Leitung für ca. fünf Sekunden gespült, um etwaige $CO_2$-Schneereste zu entfernen.

Das nachstehende Beispiel aus der Praxis veranschaulicht, wieviel $CO_2$ für eine Kühlung benötigt wird:

5000 kg Maische
Erntetemperatur: 20°C
Kühltemperatur: 5°C
spezifische Wärme von $H_2O$ cp = 4,18 kJ/kg °C
Der benötigte Kältebedarf errechnet sich folgendermaßen:  $Q = Masse \times \Delta\vartheta \times cp$
$Q = 5000 \text{ kg} \times 4,18 \text{ kJ/kg °C} \times 15°C$
$Q = 313.500 \text{ kJ}$

Um diese Kälteenergie einzubringen, sind nun ca. 1250 kg $CO_2$ erforderlich. Da die Weintrauben sehr warm sind, werden die ersten 10°C mit Kühlung durch Trockeneispellets bewerkstelligt. Dafür sind ca. 370 kg erforderlich. Die restlichen 5°C werden durch Kühlung direkt im Maischebehälter erreicht. Dafür werden ca. 450 kg $CO_2$ flüssig benötigt. Für das Kühlhalten der Maische auf 5°C über einen Zeitraum von 10 Tagen werden nochmals ca. 600 kg $CO_2$ flüssig benötigt Umgerechnet auf den daraus gewonnen Wein ergibt sich eine Belastung von ca. 0,15 EURO pro Liter.

**Patentansprüche**

1.    Verfahren zur Maischebehandlung, wobei die Maische in einem Maischebehälter (8) gelagert wird, **dadurch gekennzeichnet**, daß in den Maischebehälter (8) Kohlendioxidschnee ($CO_2$-Schnee) eingebracht wird.

2.    Verfahren zur Maischebehandlung nach Anspruch 1, **dadurch gekennzeichnet**, daß der $CO_2$-Schnee über eine Kühllanze (6), die am Austrittsende eine offene Einhausung (5) aufweist, in den Maischebehälter (8) eingetragen wird.

3.    Verfahren zur Maischebehandlung nach Anspruch 2, **dadurch gekennzeichnet**, daß die Kühllanze (6) vor der Zugabe des $CO_2$-Schnees mit $CO_2$-Gas gespült wird, wobei Maische aus der Einhausung (5) gedrückt wird und ein Gaspolster aufgebaut wird, und anschließend flüssiges $CO_2$ mit einem Druck von 20-40 bar durch die Kühllanze (6) geleitet wird, wobei am Austrittsende der Kühllanze $CO_2$-Schnee entsteht.

4.  Verfahren zur Maischebehandlung nach Anspruch 3, **dadurch gekennzeichnet**, daß nach Erreichen einer vorbestimmten Maischetemperatur die Kühllanze (6) nochmals mit $CO_2$-Gas nachgespült wird.

5.  Verfahren zur Maischebehandlung nach einem der Ansprüche 1 bis 4, **dadurch gekennzeichnet**, daß die Maische vor Eintritt in den Maischebehälter (8) durch Zugabe von Trockeneis vorgekühlt wird.

6.  Verfahren zur Maischebehandlung nach einem der Ansprüche 1 bis 5, **dadurch gekennzeichnet**, daß als Maische Weintrauben verwendet werden.

7.  Vorrichtung zur Maischebehandlung mit einem Maischebehälter (8), **dadurch gekennzeichnet**, daß der Maischebehälter (8) eine in seinen Innenraum hineinragende Kühllanze (6) aufweist, die mit einer Versorgungseinrichtung für flüssiges $CO_2$ (14) und gasförmiges $CO_2$ (13) verbunden ist.

8.  Vorrichtung zur Maischebehandlung nach Anspruch 7, **dadurch gekennzeichnet**, daß die Kühllanze (6) bis in Nähe des Maischebehälterbodens reicht.

9.  Vorrichtung zur Maischebehandlung nach Anspruch 7 oder 8, **dadurch gekennzeichnet**, daß die Kühllanze (6) am Austrittsende eine offene Einhausung (5) aufweist.

10. Vorrichtung zur Maischebehandlung nach Anspruch 9, **dadurch gekennzeichnet**, daß die Einhausung (5) glockenförmig ausgebildet ist.

Figur

**Europäisches Patentamt**

## EUROPÄISCHER RECHERCHENBERICHT

Nummer der Anmeldung

EP 00 12 2771

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | COUASNON, M., B.: "Une nouvelle technique: La maceration préfermentaire à froid - Extraction à la neige carbonique. I. Résultats oenologiques." REVUE DES OENOLOGUES ET DES TECHNIQUES VITIVINICOLES ET OENOLOGIQUES, Juli 1999 (1999-07), XP002160179 * Seite 1 * | 1,6 | C12G1/02 F25D3/12 |
| X | COUASNON, M., B.: "Une nouvelle technique: La macération préfermentaire à froid - Extraction à la neige carbonique. II. La technologie de la neige carbonique." REVUE DES OENOLOGUES ET DES TECHNIQUES VITIVINICOLES ET OENOLOGIQUES, September 1999 (1999-09), XP002160180 * Seite 1 * | 1,6 | |
| Y | | 2,3,7 | |
| Y | US 5 271 233 A (PARKER GILES W ET AL) 21. Dezember 1993 (1993-12-21) * Spalte 2, Zeile 66 - Spalte 3, Zeile 8 * * Spalte 4, Zeile 31-64 * * Spalte 12, Zeile 8-31 * * Anspruch 1; Abbildung 1 * | 2,3,7 | **RECHERCHIERTE SACHGEBIETE (Int.Cl.7)** C12G F25D |
| P,X | WO 99 58913 A (LOESCHE KLAUS ;SIKKEN DIRK (DE); WIESMANN RALF (DE); CRAFT TECH GB) 18. November 1999 (1999-11-18) * Seite 6, Absatz 3 * * Anspruch 1 * | 1 | |
| A | | 4,5,8-10 | |

Der vorliegende Recherchenbericht wurde für alle Patentansprüche erstellt

| Recherchenort | Abschlußdatum der Recherche | Prüfer |
|---|---|---|
| DEN HAAG | 13. Februar 2001 | Rooney, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EP 1 096 005 A1

## ANHANG ZUM EUROPÄISCHEN RECHERCHENBERICHT
## ÜBER DIE EUROPÄISCHE PATENTANMELDUNG NR.

EP 00 12 2771

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2001

| Im Recherchenbericht angeführtes Patentdokument | Datum der Veröffentlichung | Mitglied(er) der Patentfamilie | Datum der Veröffentlichung |
|---|---|---|---|
| US 5271233 A | 21-12-1993 | CA 2071792 A | 29-12-1992 |
| | | GB 2257501 A,B | 13-01-1993 |
| | | MW 3292 A | 12-01-1993 |
| | | ZA 9203244 A | 27-01-1993 |
| | | ZW 7192 A | 08-08-1992 |
| WO 9958913 A | 18-11-1999 | DE 19820588 A | 11-11-1999 |
| | | DE 29824089 U | 04-05-2000 |

EPO FORM P0461

Für nähere Einzelheiten zu diesem Anhang : siehe Amtsblatt des Europäischen Patentamts, Nr.12/82

7